Europäisches Patentamt

European Patent Office

Office européen des brevets

(19)

(11) Veröffentlichungsnummer : **0 208 167 B1**

(12) **EUROPÄISCHE PATENTSCHRIFT**

(45) Veröffentlichungstag der Patentschrift :
**15.03.89**

(21) Anmeldenummer : **86108089.3**

(22) Anmeldetag : **13.06.86**

(51) Int. Cl.⁴ : **B 29 D 23/22**, B 29 C 63/42,
B 29 C 65/66 // (B29K21/00,
105:02, B29L23:22)

(54) **Verfahren zum Herstellen von Schläuchen.**

(30) Priorität : **06.07.85 DE 3524286**

(43) Veröffentlichungstag der Anmeldung :
**14.01.87 Patentblatt 87/03**

(45) Bekanntmachung des Hinweises auf die Patenterteilung : **15.03.89 Patentblatt 89/11**

(84) Benannte Vertragsstaaten : .
**AT BE CH DE FR GB IT LI NL SE**

(56) Entgegenhaltungen :
**DE—A— 2 243 193**
**DE—A— 2 520 853**
**US—A— 3 749 621**
**US—A— 3 752 719**

(73) Patentinhaber : **Continental Aktiengesellschaft**
**Königsworther Platz 1**
**D-3000 Hannover 1 (DE)**

(72) Erfinder : **Besche, Anton**
**Leipziger Strasse 16**
**D-3540 Korbach (DE)**
Erfinder : **Österling, Jost**
**Am Steierköppel 15**
**D-3544 Waldeck-Höringhausen (DE)**
Erfinder : **Schwarze, Klaus**
**Am Taubenrain 5**
**D-3540 Korbach (DE)**

**Beschreibung**

Die Erfindung bezieht sich auf Verfahren zum Herstellen von Schläuchen aus natürlichem oder synthetischem Gummi mit einer Innenseele aus einer Folie eines lösungsmittelbeständigen thermoplastischen Kunststoffes, wobei über einem auf einen Anfertigungsdorn aufgezogenen Folienschlauch ein Schlauchrohling mit oder ohne Verstärkungseinlagen aufgebaut und danach unter Herstellung einer haftenden Verbindung mit dem Folienschlauch vulkanisiert wird.

Es ist bekannt und seit langem auch schon übliche Praxis, Gummischläuche mit Innenauskleidungen aus lösungsmittelbeständigen Kunststoffen auszustatten und sie dadurch zum Fördern chemisch aggressiver Flüssigkeiten wie Säuren oder Laugen, Mineralölprodukten, Kältemitteln, Farbmischungen u. dgl. brauchbar zu machen. Den Anforderungen an die chemische Beständigkeit der Innenauskleidung kann dabei durch zweckentsprechende Wahl des Kunststoffes, beispielsweise Polyamid, Polyäthylen oder halogensubstituierter Kohlenwasserstoff, in weitem Umfang Rechnung getragen werden, während andererseits die notwendige Druckfestigkeit, Biegewilligkeit und sonstige Kenngrößen der Schlauchleitung mit den bekannten Elementen der Schlauchfertigungstechnik erzielt werden. In allen Fällen hat sich die Eingliederung der einem Fremdkörper vergleichbaren Kunststoff-Innenseele in den Schlauchaufbau schon immer als problemgeladen erwiesen. Da die meistens in Rohrform nach dem Strangpreßverfahren hergestellte oder auch durch Biegen oder Wickeln von Folien oder Streifen gebildete Innenseele aus fertigungstechnischen Gründen stets eine bestimmte Mindestwandstärke aufweisen muß, verleiht sie den fertigen Schläuchen aber eine verhältnismäßig hohe Steifigkeit. Ihre Gestaltung von vornherein als Wellschlauch mit in Umfangsrichtung oder wendelig umlaufenden Wellungen schafft in dieser Hinsicht zwar Abhilfe, ist aber wiederum aus strömungstechnischen Gründen oft unerwünscht. Neben den allgemein schlechten Voraussetzungen für eine einwandfreie festhaftende Bindung in der Paarung Gummi/Kunststoff hat sich als besonders erschwerender Umstand ihre Neigung zu Faltenbildung und selbst zu örtlichem Aufreißen im Verlaufe der Schlauchaufbauarbeiten, vor allem während der abschließenden Vulkanisierung herausgestellt. Dieser stets latenten Gefahr konnte bisher nur in einem Kompromiß mit der Wahl dickerer Wandstärken für die dann auch entsprechend steifere Innenseele begegnet werden.

Der Erfindung liegt demgegenüber als Aufgabe zugrunde, mit der Einführung einer neuartigen Verfahrensmaßnahme die Voraussetzungen zum Herstellen hochwertiger Gummischläuche mit einer extrem dünnwandigen, ganzflächig und glatt ohne Faltenbildung anliegenden Innenseele aus chemisch beständigem Kunststoff zu schaffen. Diese Aufgabe wird gemäß der Erfindung, ausgehend von Verfahren der eingangs geschilderten Art, durch Verwenden eines im Vergleich zu dem Durchmesser des Anfertigungsdornes überbemessenen schrumpffähigen und nach dem Vulkanisieren eine faltenfreie und glattflächige Innenseele bildenden Folienschlauches gelöst. Der Folienschlauch, dessen Wandstärke in diesem Falle in einer bisher nicht praktikablen Größenordnung zwischen 0,02 und höchstens 0,1 mm gewählt werden kann, wird hierbei unter der Einwirkung einer erhöhten Temperatur auf den Anfertigungsdorn aufgeschrumpft und darauf der Schlauchrohling aufgebaut und vulkanisiert.

Das erfindungsgemäße Verfahren führt im Ergebnis zu einem vielseitig einsetzbaren diffusionsfesten Schlauch mit einer in allen Bereichen glatten Innenmantelfläche ohne jede Falten oder Einrisse. Infolge der ungewöhnlich dünnen Folienstärke der Innenseele verhält sich der Schlauch im ganzen hinsichtlich seiner Biegeeigenschaften und seiner Schwingungscharakteristik praktisch wie ein vergleichbarer Schlauch ohne eine solche Kunststoffinnenseele. Das Herstellungsverfahren vereinfacht sich schon mit dem Aufziehen des überbemessenen Folienschlauches auf den starren Anfertigungsdorn, während es andererseits für den dem faltenfreien Fixieren des Folienschlauches nachfolgenden üblichen Schlauchaufbau keinerlei Erschwernisse oder überhaupt Änderungen mit sich bringt. Die sehr dünne Schichtstärke der Schlauchfolie wirkt sich zudem günstig auf den Bindemechanismus aus.

Die Erfindung ist anhand der schematischen Darstellung verschiedener aufeinanderfolgender Verfahrensschritte in der Zeichnung verdeutlicht. Die Zeichnung zeigt jeweils abschnittsweise einen Anfertigungsdorn mit in:

Fig. 1 aufgezogenem,
Fig. 2 aufgeschrumpftem Folienschlauch und
Fig. 3 aufgebautem Schlauchrohling.

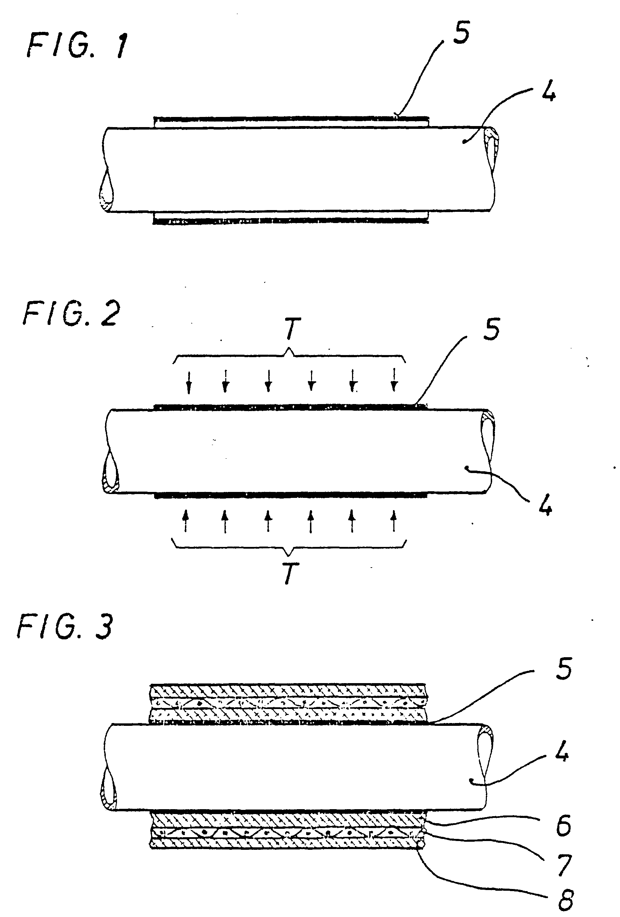

Auf den zweckmäßig von einem längeren Stahlrohr gebildeten Anfertigungsdorn 4 ist gemäß der Darstellung in Fig. 1 ein diesem gegenüber mit größerer lichter Weite bemessener Folienschlauch 5 lose aufgezogen. Der Folienschlauch ist als schrumpffähiges Gebilde beispielsweise aus Polyamid oder einem anderen thermoplastischen Kunststoff nach dem Blasverfahren hergestellt, wobei Wandstärkeeinstellungen von etwa 40 bis 60 My bei einem Schrumpfmaß bis zu 35 % als Höchstwert möglich sind. Der mit dem Folienschlauch umkleidete Anfertigungsdorn 4 wird in eine Wärmezone überführt und einer definierten Temperatureinwirkung T (Fig. 2) unterworfen, unter deren Einfluß sich der Folienschlauch 5 faltenfrei und ganzflächig glatt anliegend um den formgebenden Dorn 4 herum zusammenzieht. Danach kann der eigentliche Schlauch in üblicher Weise aufgebaut werden, was mit der Darstellung eines Innengummis 6, einer Verstärkungseinlage 7 und eines Außengummis 8 in Fig. 3 ohne jede Beschränkung auf bestimmte Schlauchtypen angedeutet ist. Die abschließende Vulkanisierung der Gummischichten hat gleichzeitig auch die Herstellung einer Haftverbindung mit dem Folienschlauch 5 zur Folge.

**Patentansprüche**

1. Verfahren zum Herstellen von Schläuchen aus natürlichem oder synthetischem Gummi mit einer Innenseele aus einer Folie eines lösungsmittelbeständigen thermoplastischen Kunststoffes, wobei über einem auf einen Anfertigungsdorn (4) aufgezogenen Folienschlauch ein Schlauchrohling mit oder ohne Verstärkungseinlagen aufgebaut und danach unter Herstellung einer haftenden Verbindung mit dem Folienschlauch vulkanisiert wird, gekennzeichnet durch die Verwendung eines im Vergleich zu dem Durchmesser des Anfertigungsdornes (4) überbemessenen schrumpffähigen Folienschlauches (5), der nach dem Vulkanisieren eine faltenfreie und glattflächige Innenseele des Schlauches bildet.

2. Verfahren nach Anspruch 1, gekennzeichnet durch die Verwendung eines Folienschlauches (5) mit einer Wandstärke in einer Größenordnung zwischen 0,02 und höchstens 0,1 mm.

3. Verfahren nach den Ansprüchen 1 und 2, dadurch gekennzeichnet, daß der Folienschlauch (5) unter der Einwirkung einer erhöhten Temperatur auf den Anfertigungsdorn (4) aufgeschrumpft und darauf der Schlauchrohling aufgebaut und vulkanisiert wird.

**Claims**

1. Method for producing hoses formed from natural or synthetic rubber, having an inner core formed from a film of a solvent-resistant, thermoplastic plastics material, a hose blank with or without reinforcing inserts being constructed over a film hose, which has been drawn onto a manufacturing mandrel (4), and being thereafter vulcanised, with the establishment of an adhesive connection with the film hose, characterised by the use of a shrinkable film hose (5), which is greater in dimension than the diameter of the manufacturing mandrel (4) and forms a fold-free and smooth-surfaced inner core of the hose after vulcanisation.

2. Method according to claim 1, characterised by the use of a film hose (5) having a wall thickness of an order of magnitude of between 0.02 and a maximum of 0.1 mm.

3. Method according to claims 1 and 2, characterised in that the film hose (5) is shrunk onto the manufacturing mandrel (4) by the application of a high temperature, and the hose blank is constructed thereon and vulcanised.

**Revendications**

1. Procédé de fabrication de tuyaux souples en caoutchouc naturel ou synthétique, comportant une âme intérieure formée d'une feuille d'une matière thermoplastique résistant aux solvants, selon lequel une ébauche de tuyau souple est formée, avec ou sans inserts de renforcement, sur un tuyau souple en feuille engagé sur un mandrin de fabrication (4) et est ensuite vulcanisée avec le tuyau souple en feuille avec établissement d'une liaison adhérente, caractérisé par l'utilisation d'un tuyau souple en feuille (5), surdimensionné par rapport au diamètre du mandrin de fabrication (4), capable de retrait et qui constitue, après la vulcanisation, une âme intérieure, exempte de plis et de surface lisse, du tuyau souple.

2. Procédé de fabrication selon la revendication 1, caractérisé par l'utilisation d'un tuyau souple en feuille (5) ayant une épaisseur de paroi d'un ordre de grandeur compris entre 0,02 mm et au maximum 0,1 mm.

3. Procédé selon une des revendications 1 et 2, caractérisé en ce que le tuyau souple en feuille (5) est rétreint sur le mandrin de fabrication (4) sous l'influence d'une température accrue et l'ébauche de tuyau souple est formée et vulcanisée sur lui.

*FIG. 1*

5

4

*FIG. 2*

T

5

4

T

*FIG. 3*

5

4

6

7

8

1